# EUROPÄISCHE PATENTSCHRIFT

(11) **EP 1 565 764 B1**
(45) Veröffentlichungstag und Bekanntmachung des Hinweises auf die Patenterteilung: **09.05.2012**
(21) Anmeldenummer: 03778257.0
(22) Anmeldetag: 12.11.2003
(51) Int. Cl.: H01J 31/50, G01T 1/29, G01J 1/42

(54) **ORTSEMPFINDLICHE MESSEINRICHTUNG**
LOCALLY SENSITIVE MEASURING DEVICE
DISPOSITIF DE MESURE SENSIBLE A L'EMPLACEMENT SPATIAL

(30) Priorität: 26.11.2002 DE 10255245
(43) Veröffentlichungstag der Anmeldung: 24.08.2005
(73) Patentinhaber: Forschungszentrum Jülich GmbH, 52425 Jülich (DE)
(72) Erfinder: LARUE, Horst, NL-6462 HX Kerkrade (NL); CHRIST, Daniela, 52396 Heimbach (DE); STREUN, Matthias, 50733 Köln (DE); BEER, Simone, 52353 Düren (DE)
(86) Internationale Anmeldenummer: PCT/DE2003/003733
(87) Internationale Veröffentlichungsnummer: WO 2004/049003

(56) Entgegenhaltungen:
- DE-A- 3 533 582
- DE-A- 4 032 193
- DE-A- 4 311 982
- DE-A- 19 602 177
- JP-A- 4 274 793
- US-A- 4 092 540
- US-A- 5 008 591
- SHAO Y ET AL: "Evaluation of multi-channel PMTs for readout of scintillator arrays" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, Bd. 390, Nr. 1-2, 1. Mai 1997 (1997-05-01), Seiten 209-218, XP004082548 ISSN: 0168-9002

## Beschreibung

Die Erfindung bezieht sich auf eine Meßeinrichtung mit einem ortsauflösenden Vielkanal-Sekundärelektronenvervielfacher (MC-PMT) zur Umwandlung von Licht in ein elektrisches Signal.

Eine derartige Meßeinrichtung ist beispielsweise aus Y. Shao, R. W. Silverman, S. R. Cherry, "Evaluation of Hamamatsu R5900 series PMTs for readout of high-resolution scintillator arrays", Nucl. Instr. Meth. A 454 (2000), 279-299 und Y. Yoshizawa, H. Ohtsu, N. Ota, T. Watanabe, J. Takeuchi, "The development and the study of R5900-00-M64 for scintillating/optical fiber read out", 1997 IEEE Nuclear Science Symposium Conference Record, Albuquerque, NM bekannt. Einfallende γ-Strahlung wird von einem Konverter in Lichtblitze umgewandelt. Die Lichtblitze treffen auf eine Photokathode des MC-PMT auf. Infolgedessen treten Elektronen aus der Kathode aus und werden im Elektronenvervielfacher (Dynodenstufen) zu einem elektrischen Meßsignal verstärkt. Auf diese Weise ist es möglich, die Strahlungsintensität sowie die Energie der Strahlung ortsabhängig zu bestimmen.

Die bekannten ortsempfindlichen Meßeinrichtungen weisen den Nachteil auf, daß die einfallende Strahlung in Abhängigkeit vom Ort des Auftreffens der γ-Strahlung auf den Konverter ein unterschiedlich starkes Meßsignal bewirken. Durch diese apparativ bedingten, ortsabhängigen Unterschiede werden erhöhte Anforderungen an die nachfolgende Elektronik gestellt.

PMT können kleinste Lichtereignisse in elektrische Signale umwandeln, indem einzelne, von Photonen ausgelöste Elektronen im Vakuum der Photomultiplier-Röhre beschleunigt werden und an sogenannten Dynoden eine Lawine von Sekundärelektronen erzeugen. Bei Vielkanal-Photomultipliern (kurz MC-PMT genannt) sind die elektronenvervielfachenden Stufen (Dynoden) zu einzelnen Kanälen ausgebildet. Jedem Eintrittsbereich auf der Photokathode ist somit ein Anodenpin am Ausgang zugeordnet. Der MC-PMT verhält sich damit wie eine Vielzahl dichtgepackter einzelner PMT. Die an den individuellen Anoden der Kanäle eintreffenden Ladungen stellen somit ein erheblich verstärktes Abbild der Lichtverteilung auf der Photokathode dar, wobei eine ortsgenaue Zuordnung der Lichtereignisse entsprechend dem von den Kanälen gebildeten Raster gegeben ist. Mit PMT kann daher beispielsweise eine ortsaufgelöste Erfassung von Szintillationsereignissen, wie sie für die Nuklearmedizin erforderlich sind, erreicht werden.

Durch den Aufbau des PMT kann es zu einem Übersprechen zwischen benachbarten Kanälen kommen. Bei Beleuchtung eines Pixels der Photo-Kathode beispielsweise durch Lichtleitfasern, gelangt das Licht durch Streuung im Kathodenfenster und durch Reflexionen in der Photomultiplier-Röhre zu einem geringen Teil auch in benachbarte Kanäle, was zu optischem Übersprechen führt. Das optische Übersprechen zwischen benachbarten Kanälen hängt von bauartbedingten Eigenschaften der Photomultiplier-Röhre, wie zum Beispiel der Dicke des Kathodenfensters, und zum anderen von der Art der Ankopplung beispielsweise der Fasern ab und wirkt sich störend auf die Auflösung des PMT aus. Zur genauen Positionierung der Lichtleitfasern über den Zentren der Kanäle offenbart (Y. Shao, S. R. Cherry, S. Siegel, R. W. Silverman, S. Majewsi, "Evaluation of multi-channel PMTs for readout of scintillator arrays", Nuclear Instruments and Methods in Physics Research A 390, 209-218 (1997)), die Lichtleitfasern durch die Löcher einer vorbereiteten Lochmaske zu den Kanälen zu führen.

In derartigen PMT wird die Ortsinformation durch die Verwendung einzelner Kanäle mit einer entsprechenden Ausleseelektronik erzielt. Nachteilig stellt sich bei diesen Detektoren das Problem der in Abhängigkeit vom Beleuchtungsort unterschiedlich starken Meßsignale. Dabei ändern sich die Meßsignale nicht kontinuierlich, sondern zwischen den einzelnen Kanälen.

Aus der Druckschrift US 5,008,591 ist eine Meßeinrichtung mit einem ortsauflösenden Konverter zur Umwandlung einfallender Strahlung in Licht bekannt. Dieses Licht wird mittels einer ortsauflösenden Photokathode in Photoelektronen umgewandelt. Zwischen dem ortsauflösenden Konverter und der Photokathode befindet sich eine Filterschicht zur Lichtabschwächung, wobei der Grad der Lichtabschwächung ortsabhängig so gewählt ist, daß apparativ bedingte, ortsabhängige Unterschiede der Ausgangssignale vermindert werden. Nachteilig können nur systematische apparative Fehler behoben werden. Individuelle Unterschiede zwischen einzelnen, ansonsten gattungsgleichen Vorrichtungen können nicht behoben werden.

Aus DE 196 02 177 C 2 ist eine ortsempfindliche Meßeinrichtung, bei der auf einfache Weise das Problem der individuell unterschiedlich starken Meßsignale vermindert wird bekannt. Zwischen einem Konverter und einem MC-PMT ist eine Folie, ein Film, eine Glasscheibe oder eine LCD-Schicht zur Lichtabschwächung, das heißt zur Lichtabsorption vorgesehen. Der Grad der Lichtabschwächung (Absorptionsgrad) variiert ortsabhängig. Um die Lichtabschwächung zu bewirken, weisen die Folie, der Film, die Glasscheibe oder die LCD-Schicht Bereiche mit unterschiedlichen Schwärzungsgraden auf. Der Grad der Schwärzung und damit der Grad der Absorption ist ortsabhängig um so stärker, je größer die apparativ bedingten Meßsignale gewesen wären, die die Meßeinrichtung ohne die Lichtabschwächung an diesen Orten ausgegeben hätte. Nachteilig läßt auch eine maximal geschwärzte Folie immer noch einen gewissen Teil Licht durchtreten. Dies führt insbesondere an denjenigen Stellen, an denen maximale Lichtabschwächung benötigt wird zu falschen (zu hohen) Meßergebnissen. An denjenigen Stellen an denen ein unverminderter Durchtritt des Lichtes erwünscht wäre, führt die Verwendung einer, wenn auch ungeschwärzten Folie dazu, daß immer noch eine unerwünschte Lichtabschwächung zu geringen Meßergebnissen auftritt.

Aufgabe der Erfindung ist es, eine Meßeinrichtung bereit zu stellen mit der apparativ bedingte, ortsabhängige Unterschiede der Ausgangssignale verhindert werden, und derart ortsaufgelöste Meßsignale liefert, wie sie von einer zu untersuchenden Probe ausgesendet werden.

Die Aufgabe wird durch eine ortsempfindliche Meßeinrichtung gemäß Hauptanspruch gelöst. Vorteilhafte Ausgestaltungen ergeben sich aus den darauf rückbezogenen Patentansprüchen.

Die Meßeinrichtung umfaßt einen MC-PMT und eine Licht undurchlässige Lochmaske. Beim Einsatz der erfindungsgemäßen Meßeinrichtung befindet sich die Licht undurchlässige Lochmaske regelmäßig zwischen dem Konverter und des MC-PMT.
Die Licht undurchlässige Lochmaske ist für Licht vollkommen undurchlässig. Sie weist Löcher unterschiedlicher Größe auf. Dies bewirkt eine im Vergleich zu aus dem Stand der Technik bekannten Vorrichtungen zur Lichtabschwächung verbesserte Regulation derselben. Die Ausgangssignale des MC-PMT sind durch geeignete Wahl der Lochmaske homogenisierbar, und dann nicht mehr durch apparativ bedingte Gegebenheiten beeinflußt. Für eine bestimmte Meßeinrichtung wird der Grad der Lichtabschwächung durch Wahl der Löchergröße ortsabhängig so gewählt, daß apparativ bedingte, ortsabhängige Unterschiede der elektrischen Meßsignale hierdurch vermindert werden.

Die Licht undurchlässige Lochmaske besteht vorteilhaft aus einem Metall, z. B. Neusilber (Legierung aus Zinn, Zink und Kupfer). Derartige Metalle sind für Licht undurchlässig und leicht zu einer Lochmaske zu verarbeiten. Es ist selbstverständlich auch möglich ein entsprechendes anderes Metall zu verwenden.

Die Licht undurchlässige Lochmaske weist abhängig vom Material vorteilhaft eine Stärke von ca. 50 µm auf. Dadurch ist beispielsweise gewährleistet, daß die Maske flexibel genug ist, um sich einer etwaigen Oberflächenkrümmung des MC-PMT anzupassen.

Die Anzahl der Löcher in der Maske ist vorteilhaft abhängig von der Anzahl der einzelnen Kanäle des MC-PMT. Ein MC-PMT mit x Kanälen weist vorteilhaft eine Licht undurchlässige Lochmaske mit ebenfalls x Löchern auf. Dadurch kann jedem Kanal ein Loch einer Lochmaske zugeordnet werden. Die Geometrie der Löcher ist dabei nicht fest vorgegeben. Geeignete Geometrien sind beispielsweise Kreise oder auch Quadrate. Vorteilhaft weisen alle Löcher einer Lochmaske die selbe Geometrie auf.

Die Größe einzelner Löcher der Maske variiert in Abhängigkeit von der Empfindlichkeit der einzelnen Kanäle des MC-PMT. Einem Kanal, welcher ein großes apparativ bedingtes Meßsignal erzeugt, wird ein kleines Loch zugewiesen. Einem Kanal, welcher ein kleines apparativ bedingtes Meßsignal erzeugt, wird ein großes Loch zugewiesen. Die Löcher der Licht undurchlässigen Maske wirken wie Blenden zur Angleichung der Verstärkung der Kanäle eines MC-PMT und homogenisieren apparativ bedingte Unterschiede der Meßsignale.

In einer weiteren Ausgestaltung der Erfindung sind die Löcher der Maske so vor den Kanälen des MC-PMT angeordnet, daß das einfallende Licht durch die Löcher tritt und jeweils auf die Mitte der Kanäle des MC-PMT begrenzt wird.
Dies bewirkt vorteilhaft, daß ein Übersprechen von Licht zwischen benachbarten Kanälen vermindert wird.

In einer besonders vorteilhaften Ausgestaltung der Erfindung ist als MC-PMT ein PMT, insbesondere mit einer Vielzahl einzelner Kanäle und insbesondere mit 64 Kanälen, vorgesehen.
Vorteilhaft ist die Licht undurchlässige Lochmaske als Blendenanordnung, so zwischen dem PMT als MC-PMT und dem Konverter angeordnet, daß das in die Kanäle eintretende Licht jeweils auf die Kanalmitte begrenzt wird. Damit wird das Übersprechen von Licht zwischen benachbarten Kanälen stark vermindert.

Da der Detektor einzelne Kanäle besitzt, läßt sich das für die Erstellung der Masken notwendige Ausmessen der Detektoren im Vergleich zu DE 196 02 177 C2 stark vereinfachen. Die Detektorfläche wird dazu gleichmäßig beleuchtet, während die Signale an den einzelnen Kanälen gemessen werden. Ein aufwendiges und zeitraubendes Abscannen des Detektors entfällt.

Mit derartigen Meßanordnungen erzielte Meßergebnisse zeigen eine besonders gute Homogenisierung der Ausgangssignale sowie eine starke Unterdrückung des Übersprechens.

Im weiteren wird die Erfindung an Hand eines Ausführungsbeispiels und der beigefügten vier Figuren näher beschrieben.
Figur 1 zeigt die Meßergebnisse für einen 64-Kanal-Photomultiplier, ohne Maske zur Homogenisierung der Meßsignale.
Figur 2 zeigt die Vorlage für eine Lochmaske aus Neusilber für einen 64-Kanal-Photomultiplier.
Figur 3 zeigt die Meßergebnisse für einen 64-Kanal-Photomultiplier, mit einer Licht undurchlässigen Lochmaske zur Homogenisierung der Meßsignale.
Figur 4 zeigt eine erfindungsgemäße Meßeinrichtung.

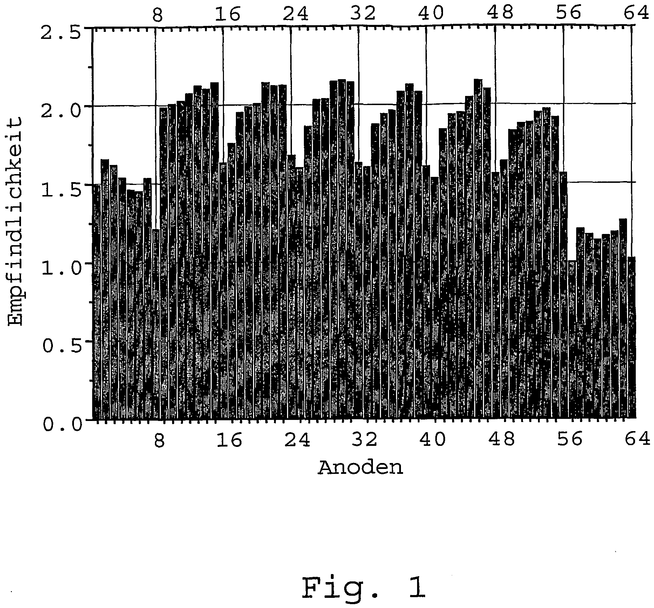

Zur Bestimmung der ortsabhängigen Unterschiede der Ausgangssignale werden die MC-PMT mit Hilfe einer blauen LED ausgemessen. Hierbei zeigt sich ohne eine Licht undurchlässige Lochmaske zwischen Photokathode und PMT ein sehr inhomogenes Empfindlichkeitsmuster der einzelnen Kanäle des MC-PMT. Figur 1 zeigt ein Beispiel für die 64 Kanäle eines PMT, deren relative Empfindlichkeit zwischen 1.0 und 2.5 variiert. Zum Beispiel weist Kanal 57 die Empfindlichkeit 1 und Kanal 31 die Empfindlichkeit 2.5 auf.

Um eine Angleichung der Empfindlichkeiten zu erreichen, wird nur für einen MC-PMT eine entsprechende Lochmaske angefertigt. Dabei erhält jeder Kanal eine Blende, deren Öffnungsfläche umgekehrt proportional zur zuvor gemessenen Empfindlichkeit ist. Die maximale Blendengröße wird zuvor festgelegt und ist der unempfindlichsten Anode zugeordnet.

Die Masken werden aus einem Licht undurchlässigen Material, z. B. Metall oder Kunststoff, in beliebigen Stärken gefertigt. Beim Verfahren zur Erstellung der Löcher kann ebenfalls auf konventionelle Herstellungsverfahren zurückgegriffen werden.

Die ausgemessenen Empfindlichkeiten der einzelnen Kanäle des MC-PMT werden zur Erstellung der Licht undurchlässigen Lochmasken verwendet

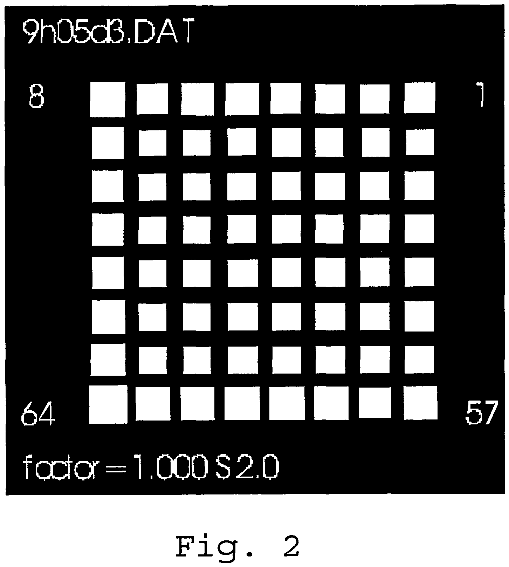

Fig. 2 zeigt die Vorlage für eine solche Licht undurchlässige Lochmaske für einen bestimmten MC-PMT, wobei die maximale Lochgröße 2 x 2 mm² beträgt (dies entspricht dem unempfindlichsten Kanal).

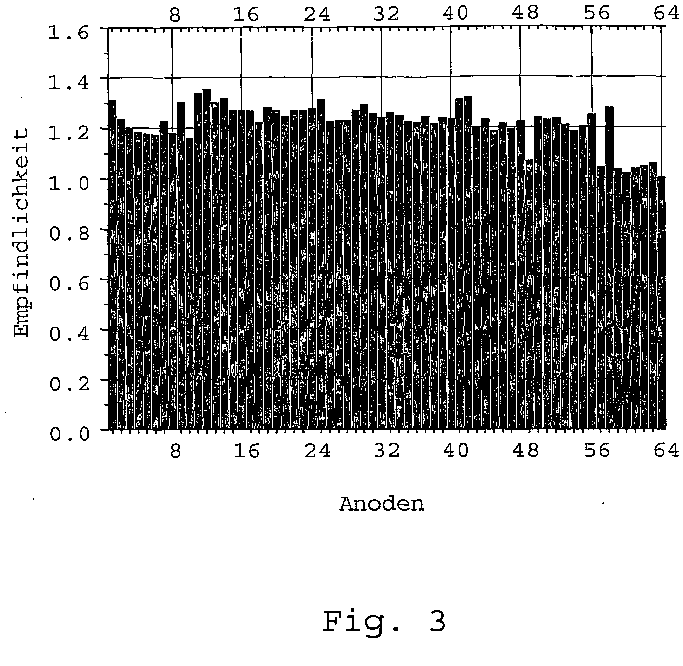

Das Ausmessen der Empfindlichkeiten und Wandeln dieser Werte zu einer Lochschablone wird für jeden MC-PMT einzeln und exakt durchgeführt. Eine solche Metallmaske homogenisiert die Empfindlichkeit des PMT, wie in Figur 3 gezeigt. Die relative Empfindlichkeit für den unempfindlichsten Kanal bleibt bei 1,0 der maximale Wert liegt nach Ausgleich bei 1,3.

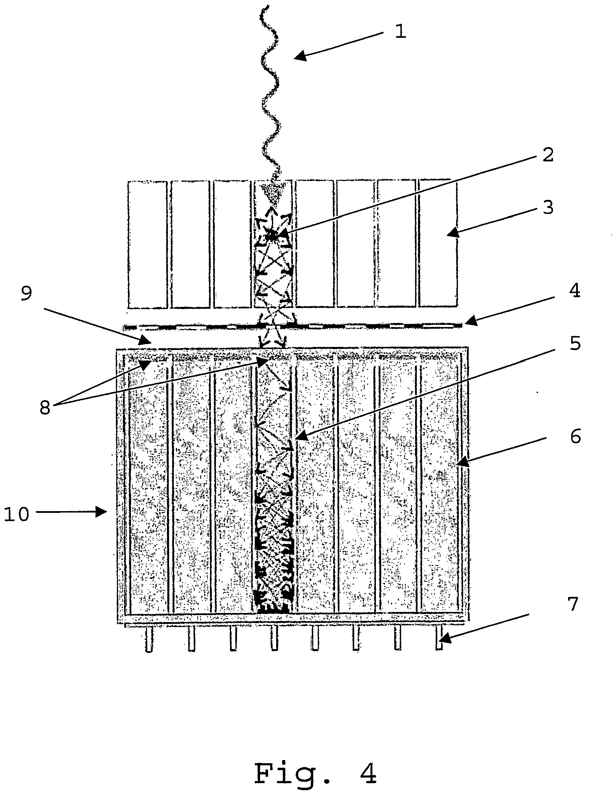

Figur 4 zeigt am Beispiel eines Szintillationsdetektors das Funktionsprinzip der lichtabschwächenden Lochmasken. Ein einfallendes γ-Qant (1) macht im Szintillationskristall (3) eine Wechselwirkung. Dadurch wird im Kristall sichtbares Licht erzeugt (2). Zur Gewährleistung der Ortsauflösung liegen die Szintillationskristalle in Form von Stäbchen vor. In diesen Stäbchen wird das Licht wie in einer Lichtleitfaser geleitet und tritt am unteren Rand aus dem Kristall aus und trifft auf die zugeordnete Photokathode (8). Die Kristallstäbchen sind untereinander gegen das Übersprechen des Lichtes isoliert, ebenso am oberen Rand der Kristalle (3) gegen das Austreten des Lichtes. Würden die Kristalle direkt an das Fenster des MC-PMT (9) gekoppelt, könnte das austretende Licht je nach Dicke des Fensters auf benachbarte Photokathoden (8) übersprechen. Durch das Einbringen der Maske (4) wird die Eintrittsöffnung für das Licht auf die Photokathode (8) verringert. Das unterbindet einerseits das Übersprechen, anderseits kann durch die Größe des Loches bestimmt werden, wieviel Licht auf die Photokathode fällt. Dadurch kann die Menge des Lichtes, die beispielsweise auf einen Kanal mit hoher Verstärkung fällt, gering gehalten werden, und die Menge des Lichtes, das auf einen Kanal mit geringer Verstärkung fällt, durch ein möglichst großes Loch in der Maske hoch gehalten werden.
In der Zeichnung ist zur besseren Darstellung Platz zwischen Szintillationskristallen, Maske und PC-PMT gelassen. In der Anwendung sind Kristalle, Maske und MC-PMT direkt aneinander gekoppelt, so daß die Maske durch Kristalle und MC-PMT gehalten wird.
(1) einfallende γ-Strahlung
(2) Umwandlung von Strahlung in Licht im Szintillationskristall (isotrope Ausbreitung und Reflektiön des Lichtes)
(3) Einer von acht Szintillationskristallen
(4) Maske (schwarz: lichtundurchlässiger Teil; weiß: lichtdurchlässiger Teil)
(5) Dynode, zu Kanal ausgebildet
(6) Dynode, zu Kanal ausgebildet
(7) Anodenpin
(8) Photokathoden
(9) Kathodenfenster
(10) MC-PMT

Das Prinzip ist allgemein überall da einsetzbar, wo MC-PMT Verwendung finden.

### Definition

Photomultiplier (PMT)
   = Sekundärelektronenvervielfacher
   = photomultiplier tube
   = PMT
   Besteht aus: 1 Photokathode zur Umwandlung von Licht in Elektronen, 10-12 Dynodenstufen zur Verstärkung der Elektronen, 1 Anode.
Ortsempfindlicher PMT vom Typ PS-PMT
   = Ortsauflösender PMT
   = position-sensitive Photomultiplier tube
   = PS-PMT
   PMT, bei dem die Ortsauflösung durch Schwerpunktbildung der Signale einer speziell ausgestalteten Anode erreicht wird. Besteht aus: 1 Photokathode, 10-12 speziell ausgestaltete Dynodenstufen, 1 speziell ausgestaltete Anode.
Ortsempfindlicher PMT vom Typ MC-PMT
   = Multi-channel Photomultiplier tube
   = Vielkanal-PMT
   = MC-PMT
   PMT, bei dem die Ortsauflösung erreicht wird, in dem
   a) die Photokathode in mehrere (z. B. 64) einzelne Bereiche aufgeteilt ist,
   b) die Dynodenstufen zu Kanälen ausgebildet sind, die den Photokathoden-Bereichen entsprechen,
   c) und jedem Dynoden-Kanal eine eigene Anode zugeordnet ist.

Die Erfindung bezieht sich auf PMT vom Typ MC-PMT.

## Patentansprüche

1. Meßeinrichtung mit einem ortsauflösenden Vielkanal-Photomultiplier (MC-PMT) (10) zur Umwandlung von Licht in ortsabhängige elektrische Meßsignale, mit einer Licht undurchlässigen Lochmaske (4) vor dem MC-PMT (10), wobei vor den Kanälen des PMT die Löcher der Licht undurchlässigen Lochmaske angeordnet sind, **dadurch gekennzeichnet, daß** die Lochmaske Löcher unterschiedlicher Größe aufweist, wobei die Löchergröße ortsabhängig so gewählt wird, dass apparativ bedingte, ortsabhängige Unterschiede der elektrischen Meßsignale hierdurch vermindert werden.

2. Meßeinrichtung nach vorhergehendem Anspruch,
**gekennzeichnet durch**,
eine Licht undurchlässige Lochmaske aus Metall, insbesondere Neusilber.

3. Meßeinrichtung nach einem der vorhergehenden Ansprüche,
**gekennzeichnet durch**
eine Lochmaske mit einer Stärke von 50 µm.

4. Meßeinrichtung nach einem der vorhergehenden Ansprüche,
**dadurch gekennzeichnet, daß**
die Lochmaske eine Anzahl von Löchern umfaßt die identisch mit der Anzahl der Kanäle des MC-PMT ist.

5. Meßeinrichtung nach einem der vorhergehenden Ansprüche,
**dadurch gekennzeichnet, daß**
die Löcher der Lochmaske so vor den Kanälen des MC-PMT angeordnet sind, daß das eintretende Licht jeweils auf die Mitte des Kanals begrenzt ist, so daß ein Übersprechen zwischen den Kanälen vermieden wird.

6. Meßeinrichtung nach einem der vorhergehenden Ansprüche,
**dadurch gekennzeichnet, daß**
die Größe eines Loches umgekehrt proportional zur Empfindlichkeit eines zugeordneten Kanals ist.

7. Meßeinrichtung nach einem der vorhergehenden Ansprüche,
**gekennzeichnet durch**
einen oder eine Vielzahl an MC-PMT (10).

## Claims

1. Measuring device with a locally resolving multiple channel photomultiplier (MC-PMT) (10) for converting light into locally dependent electrical measuring signals with a hole mask (4), which is impenetrable to light, in front of the MC-PMT (10), in which the holes of the hole mask, which is impenetrable to light, are arranged in front of the channels of the PMT, **characterised in that** the hole mask has holes of different sizes, in which the hole size is selected in a locally dependent way so that locally dependent differences in electrical measuring signals due to instruments are reduced through this.

2. Measuring device according to the previous claim,
**characterised by**
a hole mask, which is impenetrable to light, made of metal, particularly new silver.

3. Measuring device according to one of the previous claims,
**characterised by**
a hole mask with a thickness of 50 µm.

4. Measuring device according to one of the previous claims,
**characterised in that**
the hole mask has a number of holes, which is identical to the number of channels of the MC-PMT.

5. Measuring device according to one of the previous claims,
**characterised in that**
the holes of the hole mask are arranged in front of the channels of the MC-PMT so that the light entering is limited to the middle of the channel so that crosstalk between channels is avoided.

6. Measuring device according to one of the previous claims,
**characterised in that**
the size of a hole is inversely proportional to the sensitivity of a channel allocated.

7. Measuring device according to one of the previous claims,
**characterised by**
one of several MC-PMT (10).

## Revendications

1. Dispositif de mesure comportant un photomultiplicateur à plusieurs canaux (MC-PMT) (10) à résolution spatiale servant à convertir de la lumière en des signaux de mesure électriques dépendant de la localisation, comportant un masque perforé (4) imperméable à la lumière devant le MC-PMT (10), sachant que les alésages du masque perforé imperméable à la lumière sont disposés devant les canaux du PMT, **caractérisé en ce que** le masque perforé présente des alésages de taille différente, sachant que la taille des alésages est choisie en fonction de la localisation de telle sorte que des différences des signaux de mesure électriques inhérentes à la localisation, dues aux appareillages sont ainsi atténuées.

2. Dispositif de mesure selon la revendication précédente,
**caractérisé par**
un masque perforé imperméable à la lumière en métal, de préférence en argentan.

3. Dispositif de mesure selon l'une quelconque des revendications précédentes,
**caractérisé par**
un masque perforé présentant une épaisseur de 50 µm.

4. Dispositif de mesure selon l'une quelconque des revendications précédentes,
**caractérisé en ce que**
le masque perforé comporte une multitude d'alésages, laquelle est identique à la multitude de canaux du MC-PMT.

5. Dispositif de mesure selon l'une quelconque des revendications précédentes,
**caractérisé en ce que**
les alésages du masque perforé sont disposés de telle manière devant les canaux du MC-PMT que la lumière entrante est concentrée sur la moitié de chaque canal de sorte qu'on évite une intermodulation entre les canaux.

6. Dispositif de mesure selon l'une quelconque des revendications précédentes,
**caractérisé en ce que**
la taille d'un alésage est inversement proportionnelle à la sensibilité d'un canal associé.

7. Dispositif de mesure selon l'une quelconque des revendications précédentes,
**caractérisé par**
un photomultiplicateur à plusieurs canaux ou par une pluralité de photomultiplicateurs à plusieurs canaux (MC-PMT) (10).
